# EUROPEAN PATENT SPECIFICATION

(11) **EP 2 136 162 B1**
(45) Date of publication and mention of the grant of the patent: **17.10.2018**
(21) Application number: 09160603.8
(22) Date of filing: 19.05.2009
(51) Int. Cl.: F25B 41/06

(54) **Method for the regulation of a cooling plant with a high cooling capacity, in particular for the processing of food mixtures**
Steuerungsverfahren fur Kühlanlage mit hoher Kühlkapazität, insbesondere zur Verarbeitung von Lebensmittelmischungen
Procédé de régulation pour installation de refroidissement avec haute capacité de refroidissement, en particulier pour le traitement de mélanges alimentaires

(30) Priority: 19.06.2008 IT MI20081118
(43) Date of publication of application: 23.12.2009
(73) Proprietor: BRAVO S.p.A., 36075 Montecchio Maggiore (Vicenza) (IT)
(72) Inventor: Bravo, Genesio, 36075, Alte Ceccato (Vicenza) (IT)
(74) Representative: Martegani, Franco

(56) References cited:
- EP-A1- 0 448 345
- EP-A2- 1 783 460
- DE-A1- 19 631 914
- GB-A- 2 247 543
- IT-B1- 1 301 892
- JP-A- H08 327 163
- US-A1- 2002 174 665

## Description

The present invention relates to a method for the regulation of a cooling plant with a high cooling capacity, in particular for the processing of food mixtures of a liquid or pasty nature.

High-capacity plants are generally assembled on non-removable machines and have a reduced volume and length of the pipes and therefore a rapid recirculation of the cooling liquid which allows reasonable and well-defined quantities of food mixtures having high temperatures, such as for example 90°C, to be brought, in semi-continuous cycles, to their freezing point in extremely rapid times, even less than 10 minutes.

JP H08 327163 A and EP 0 448 345 A1 disclose cooling plants with a high cooling capacity, comprising a closed circuit in which a cooling fluid flows, which connects an evaporator, a compressor, a condenser and a lamination valve in succession.

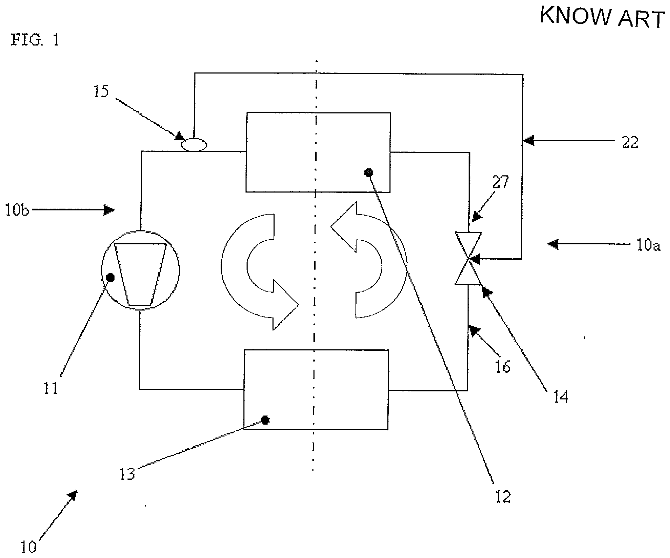

At present, as illustrated in figure 1, a high-capacity cooling plant 10 comprises four main components: a compressor 11, an evaporator 12, a condenser 13 and a lamination valve 14 of the mechanical type.

In general terms, this plant is divided into two parts 10a, 10b, of which in a first part 10a, the cooling fluid is in the gaseous or overheated vapour state, and in a second part 10b, the same fluid is in the liquid state or subcooled liquid state.

The first part 10a comprises a portion of the evaporator 12 and condenser 13 and the whole compressor 11, whereas the second part comprises the remaining parts of the evaporator 12 and condenser 13 and the whole part of the lamination valve 14.

Ideally, a compression of the cooling fluid in an overheated vapour state takes place in the compressor 11, which increases both the pressure and the temperature. The area downstream of the compressor 11 is therefore defined as high pressure and high temperature.

The fluid, which in this section is in the gaseous state, is then pushed out of the compressor 11 and is directed towards the condenser 13 where it is cooled through suitable cooling means (not shown) keeping the pressure unvaried and in particular coinciding with that at which it left the compressor 11.

As it passes through this component 13, the fluid is cooled releasing heat to the cooling means and, due to the constant pressure, begins to condense becoming completely liquid.

Once it has left the condenser 13, the completely liquid fluid, which now has a lower temperature but still the same pressure as when it left the compressor 11, is directed towards the lamination valve 14 where it undergoes nebulization, thus obtaining a vertical pressure drop.

The area downstream of the lamination valve 14 is therefore defined as low pressure and low temperature.

The low-pressure nebulized liquid thus enters the last component i.e. the evaporator 12 where, at low pressure, it begins to absorb heat from the surrounding environment and once again change state slowly passing to the gaseous phase. In this way, there is an increase in the temperature of the fluid which is finally sent to the compressor 11 for restarting the same cycle.

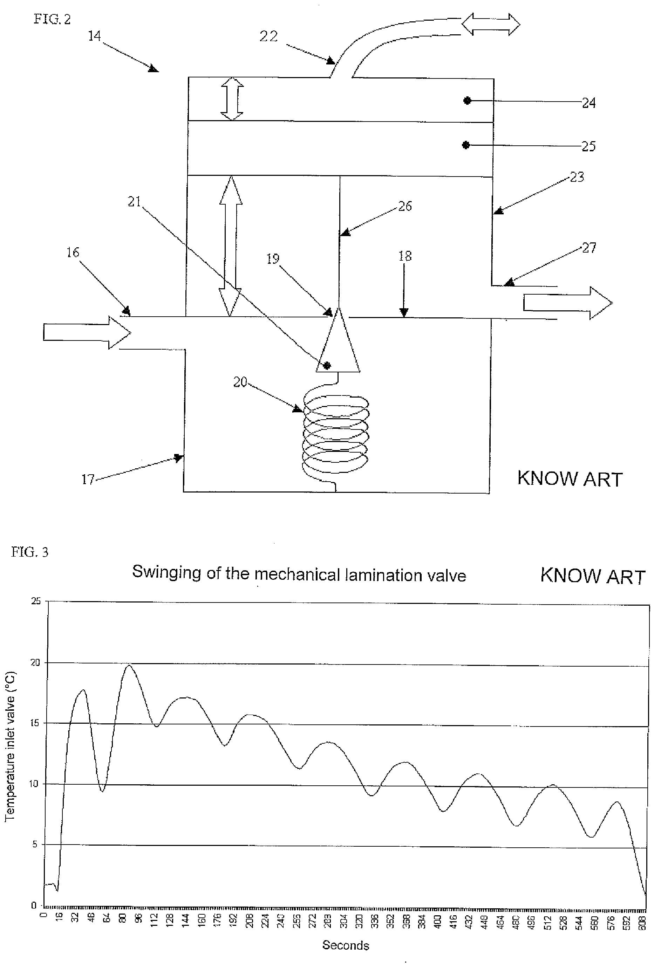

Figure 2 schematically illustrates a lamination valve 14 of the mechanical type currently widely used in known cooling plants.

This valve 14, situated between the condenser 13 and the evaporator 12, receives the high-pressure gas from an inlet tube 16 where it enters into a first sealed chamber 17 separated from the rest of the valve body 23 through a septum 18 having a hole 19.

In the first sealed chamber 17, there are two mechanical organs 20, 21 which regulate the passage of the fluid from the first sealed chamber 17 to the remaining part 23 of the valve body. Said mechanical organs 20, 21 generally comprise a shutter 21 integrally fixed to a spring 20. The shutter 21 has the function of opening or closing the hole 19 present on the septum 18.

When the high-pressure cooling liquid reaches the lamination valve 14, this liquid fills the first chamber 17 and begins to be nebulized from the hole 19 on the septum 18.

The nebulized fluid then leaves the outlet tube 27 situated in the remaining part 23 of the valve body and is directed towards the evaporator 12 where it cools the food mixture and is in turn heated.

The regulation of the entity of the cooling effect of the cooling plant 10 is generally effected by acting on the lamination valve 14.

For this purpose, a thermostat-regulated bulb 15 is currently envisaged, downstream of the evaporator 12, which reveals the temperature of the fluid at the outlet of the evaporator 12.

The bulb 15 is connected through a connection tube 22 to a second sealed chamber 24 situated above a piston 25 which separates the lamination valve 14 from said second chamber 24.

The piston 25 is integrally fixed to the mechanical means 20, 21 of the lamination valve 14 by suitable device, such as for example a rod 26.

The bulb 15 and the connection tube 22 contain a fluid which expands when the temperature revealed by the bulb 15 is higher than room temperature, whereas it contracts if the temperature revealed is lower.

At the outlet of the evaporator 12, the fluid is completely gaseous and the bulb 15 absorbs its temperature, which, at the beginning of the cooling process, is generally relatively high as the cooling liquid has absorbed a great deal of heat from the food mixture to be cooled.

The high temperature of the cooling fluid heats the fluid present in the bulb 15 which expands in the second sealed chamber 24 acting on the piston 25 which in turn compresses the spring 20 of the lamination valve 14. The shutter 21 thus partially frees the hole 19 situated on the septum 18.

This larger opening causes a greater presence of nebulized liquid in the evaporator 12 and therefore a greater removal of heat from the food mixture.

In spite of the simple functioning of the regulation of the entity of the cooling effect in the known cooling plants 10, there are various disadvantages.

This regulation is in fact relatively slow, as the bulb 15 is not capable of reacting in rapid times with a variation in temperature of the cooling fluid leaving the evaporator 12.

Initially, in fact, following the larger opening of the hole 19 piloted by the piston 25 and therefore the expansion of the fluid of the bulb 15, the temperature of the fluid downstream of the evaporator 12 rapidly decreases.

The slow reaction of the bulb 15 with this rapid variation in temperature leads to an excessive decrease in the temperature of the fluid downstream of the evaporator 12 which generally undergoes a drastic collapse to an extent of as much as 50%.

Consequently the gas contained in the bulb 15 is also cooled excessively causing an excessive rising of the piston 25 and a repositioning close to the initial position of the shutter 21 which therefore substantially recloses the hole 19 present on the septum 18.

There is consequently a considerable increase in the temperature of the cooling fluid downstream of the evaporator to which the bulb 15 is not capable of reacting instantaneously.

As a result of this phenomenon, before reaching a regulation equilibrium, there is a so-called "swinging" of the lamination valve 14, graphically illustrated in figure 3, which considerably slows down the cooling times of the mixtures.

Various methods are currently known for reducing the swinging but this substantially always occurs due to the intrinsic behaviour of the regulation bulbs 15 used and in particular due to the slow reaction of the bulbs 15 with the variation in temperature of the cooling liquid.

Even if the swinging is minimum, it drastically reduces the capacity of a high-performance cooling plant with a rapid recirculation of the cooling fluid.

There is also another weak point of the mechanical lamination valve, this point is specifically the connection tube 22 between the bulb 15 and the chamber 24. This bulb is very thin (to reduce the thermal exchanges with the surrounding environment to the maximum) but is parellelly also extremely fragile, should said duct 22 in fact undergo breakage with a loss of the gas contained in it, the lamination valve 14 would no longer be able to react to the changes in temperature at the outlet of the evaporator 12, completely closing the laminating mouth 19 and causing a pressure drop inside the evaporator 12 which would reach excessively low levels in very rapid times forcing the compressor 11 to bring the whole plant 10 to vacuum conditions.

In this circumstance, a low-pressure safety manostat (not illustrated) would intervene which, by blocking the compressor 11, also blocks the whole processing. This creates considerable productive delays and requires the intervention of specialized staff to be able to restart the processing.

Problems also arise in the processing of delicate food mixtures which must not be cooled too rapidly such as for example pastry cream or chocolate or whipped creams, savoury creams, pâtés, dressings, sauces, soups and risottos. These mixtures in fact cannot come into contact with water in solid or liquid form otherwise they tend to be irreparably ruined.

With traditional plants there are consequently various problems linked to the impossibility of sufficiently dosing the entity of cooling energy which therefore causes the formation of ice on the walls of the evaporator during this phase of the processing, these problems are intensified using low quantities of mixture.

In order to overcome these problems, it is currently necessary to switch the compressor on and off at regular, pre-established intervals, thus causing wear of the component and high consumptions of electric energy due to absorption peaks of the electric motor inside the compressor itself in the start-up phase.

A general objective of the present invention is to solve the drawbacks of the known art described above in an extremely simple, economical and particularly functional manner.

A further objective of the present invention is to create a method for a cooling plant which is capable of rapidly reaching the desired entity of the cooling effect and does not have the phenomenon of swinging during the phase when this cooling effect is reached.

Another objective of the present invention is to create a method for a cooling plant which does not encounter stoppage conditions caused by an excessively low pressure inside the plant.

Yet another objective of the present invention is to provide a method for a cooling plant which is capable of maintaining minimum consumption regimes without encountering excessively low pressure conditions inside the plant.

A further objective of the present invention is to create a regulation method of a cooling plant which allows it to reach a cooling effect of a desired entity avoiding swinging phenomena.

In view of the above objectives, according to the present invention, a method for the regulation of a cooling plant has been conceived having the characteristics specified in the enclosed claims.

The characteristics of the present invention and its advantages with respect to the known art will appear more evident from the following description, referring to the enclosed drawings which illustrate a cooling plant (not part of the claimed invention) and a control method of the same implemented according to the innovative principles of the invention itself.

In the drawings:
- figure 1 is a block schematic representation of a cooling plant belonging to the state of the art;
- figure 2 is a schematic representation of a lamination valve used in a cooling plant according to the state of the art;
- figure 3 is a graph representing the trend with time of the temperature of the cooling fluid at the inlet of the lamination valve, characteristic of a cooling plant belonging to the state of the art;
- figure 4 is a block schematic representation of a first preferred embodiment of a cooling plant;
- figure 5 is a graph representing the trend with time of the temperature of the cooling fluid at the inlet of the lamination valve, characteristic of a cooling plant;
- figure 6 is a comparative graph of the trend with time of the temperature of the food mixture to be cooled in a cooling plant of the state of the art and in a cooling plant here disclosed;
- figure 7 is a schematic representation of a lamination valve used in a cooling plant;
- figure 8 is a block schematic representation of a second preferred embodiment of a cooling plant;
- figure 9 is a block schematic representation of a third preferred embodiment of a cooling plant;
- figure 10 is a block scheme of the regulation method of a cooling plant according to the present invention.

With reference to the figures, these show a cooling plant indicated as a whole with 100.

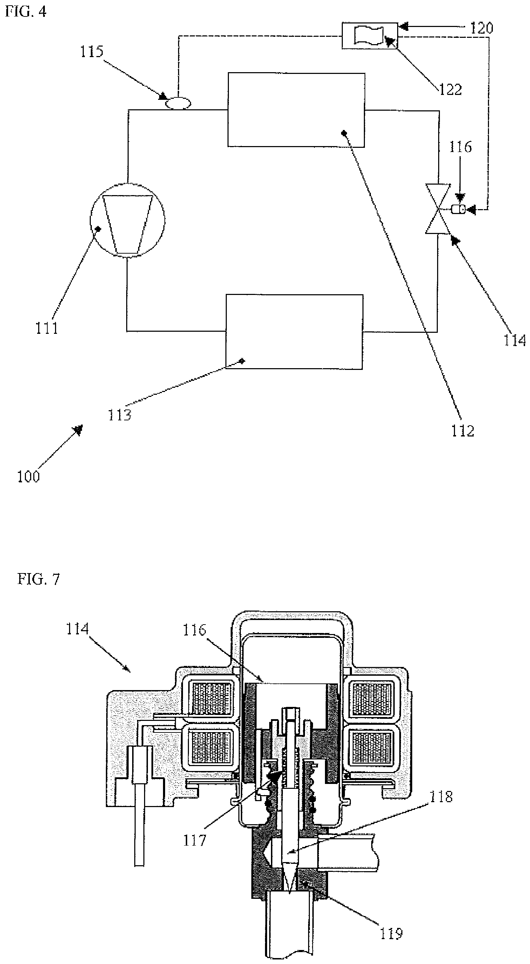

According to the embodiment illustrated in figure 4, the cooling plant 100 comprises a closed circuit in which a cooling fluid flows and which connects an evaporator 112, a compressor 111, a condenser 113 and a lamination valve 114 in succession.

According to the present invention, the lamination valve 114 used in the cooling plant 100 is of the electromechanical type and is electronically driven by a processing unit 120 such as for example an electronic centre.

According to a preferred embodiment, the lamination valve 114 of the electromechanical type comprises a servomechanism consisting of an electric motor 116 of the stepper type which, by means of a worm screw 117 entrusted to the same, drives the translation of a plug 118 thus modifying the engagement degree of the same with a gas outlet mouth 119.

Completely equivalently, the electromechanical lamination valve 114 can be of the solenoid type which raises and lowers a drum which in turn closes or opens the mouth.

Analogously, it is possible to use an electromechanical lamination valve 114 consisting of two superimposed plates, of which one is perforated for a part of the circumference whereas the other is in the shape of a half-moon and is moveable under the action of an electric motor so as to uncover a variable number of holes depending on the lamination degree necessary.

These valves all have the same capacity of opening and closing the mouth in rapid times and also allow, if suitably driven, extremely rapid reaction times to be obtained with negligible variations with a good precision level.

Depending on the requirements, the opening and/or closing of the lamination valve 114 is piloted by a timed processing unit 120, or on the basis of the values revealed by at least one probe 115 suitable for measuring a significant parameter of the flow-rate of cold cooling fluid necessary for obtaining the particular cooling action desired.

This parameter for example can be the temperature. For this purpose, one or more probes 115 are used, which reveal the temperature of the cooling fluid.

Said probes 115 are preferably positioned downstream the evaporator 112 in order to determine the temperature of the cooling fluid immediately after the heat exchange which takes place in the evaporator 112 with the food mixture to be cooled. It is thus possible to obtain a measurement which indicates the state of the mixture itself and determine whether the cooling effect of the plant 100 is sufficient.

In particular, a temperature which is indicated as being greater than the desired value implies an insufficient opening of the lamination valve 114 and therefore an insufficient flow-rate of the cold cooling fluid towards the food mixture.

Analogously, it is possible to use probes 115 for determining the pressure of the cooling fluid, also preferably situated downstream of the evaporator 112. These probes 115 are also capable of indirectly providing an index measurement of the instantaneous state of the food mixture and thus determining if the cooling effect of the plant 100 is sufficient.

In particular, a pressure which is indicated as being greater than the desired value implies an insufficient opening of the lamination valve 114 and therefore an insufficient flow-rate of the cold cooling fluid towards the food mixture.

Differently, and for the first time in this type of machine, temperature probes in contact with the mixture to be cooled are used, or ionic or tension probes, for example such as those described in Italian patent IT 1 301 892 owned by the Applicant, capable of determining the creaming degree of the food mixture. The lower the creaming degree of the food mixture, the greater the opening degree required by the lamination valve 114 will be.

Said probes 115 are preferably immersed in the food mixture to be cooled.

Alternative embodiments are also envisaged, using various probes 115 capable of revealing different parameters, such as for example at least one temperature probe positioned downstream of the evaporator 112, coupled with at least one ionic probe.

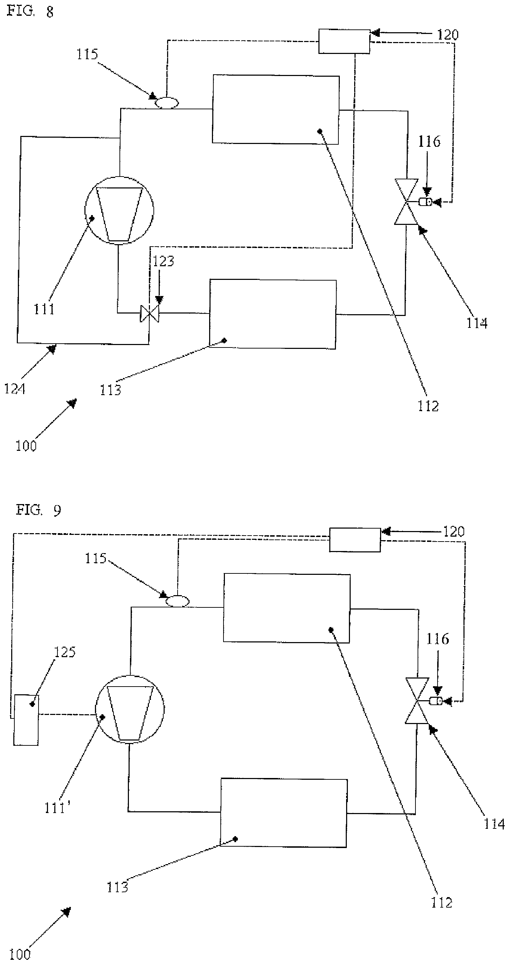

In the second embodiment illustrated in figure 8, the cooling plant 100 additionally comprises a second valve 123, preferably of the electromechanical solenoid type, situated downstream of the compressor 111 and which controls the opening of a bypass tube 124 capable of short-circuiting the supply of the compressor 111 to the low-pressure area.

The second valve 123 is controlled by the processing unit 120 which receives an activation signal at the inlet from a safety manometer (not illustrated) when the same reveals an excessively low pressure value upstream of the compressor 111.

In this circumstance, the processing unit 120 pilots the second valve 123 which is opening, allowing the excess gas to flow through the bypass tube 124.

Said bypass tube 124 is suitably dimensioned so that not all the gas flows through it. The suction pressure is therefore kept high avoiding the intervention of the safety manometer. The use of a bypass tube 124 piloted in the opening by a second valve 123 prevents the compressor 111 from bringing the whole plant 110 to vacuum conditions by the intervention of the low-pressure safety manometer, which would block the compressor and therefore the whole processing.

A similar circumstance could arise in the absence of the second valve 123 and the bypass tube 124, when the lamination valve 114 is closed excessively and the pressure inside the evaporator 112 is lowered too rapidly.

The third embodiment illustrated in figure 9 differs in the fact that the compressor 111' is of the type comprising an electric motor (not illustrated) which regulates the functioning rate of the compression chamber, modulating the cooling capacity of the same 111'. The electric motor of the compressor 111' is driven by an inverter 125 in turn piloted by means of the processing unit 120. For the piloting of the inverter 125, the processing unit 120 is based on the signal which it receives at the inlet from the probe 115.

The functioning of the cooling plant 100 is the following.

Reference is preferably and non-limitingly made to an embodiment using a temperature probe 115 situated in the evaporator 112 in contact with the product contained therein.

When the temperature probe 115 reveals a higher temperature than the freezing temperature to be reached, the processing unit 120 commands the opening of the lamination valve 114 i.e., in the specific case of the embodiment illustrated, it drives the electric motor 116 so as to lift the plug 118 by a predetermined number of pitches, thus nebulizing a greater quantity of cooling liquid.

As the temperature revealed and taken as reference by the probe 115 is lowered, the processing unit 120 commands the closing of the lamination valve 114 reducing the presence of cooling fluid in the evaporator 112.

For this purpose, the processing unit 120 receives at the inlet the values revealed by the probes 115 and suitably processes them through the software means 122 in order to determine the required opening degree of the lamination valve 114 and consequently the commands to be given to the servomechanism present in the same 114.

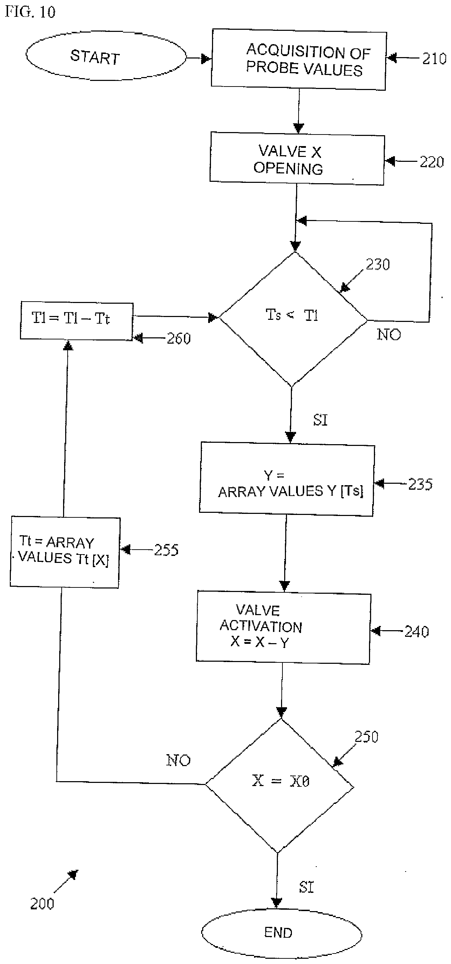

In particular, with reference to figure 8, the software means implement a method 200 (figure 10) for determining the optimum opening of the lamination valve 114 comprising the following phases.

First of all the instantaneous values of the parameters measured Tₛ by the at least one probe 115 are acquired (phase 210). For each reading more sampling values are acquired and processes, for example through mean values and the elimination of spurious values, in order to obtain a significant datum of the parameter revealed.

The initial opening X of the valve 114 is subsequently established (phase 220).

The values of the parameters Tₛ revealed and, depending on the case, suitably processed, are compared (phase 230) with a limit value Tₗ known from the projecting and below which a loss in efficiency of the cooling plant 100 is obtained.

Should the values of the parameters revealed Tₛ be lower than this limit value Tₗ it is possible to pilot the opening or closing of the lamination valve 114.

In particular, the opening of a first incremental value Y is modified, depending on the particular value of the parameter measured Tₛ according to a logarithmic law whose argument is given by the sum of the parameter measured Tₛ and a limit value T₀ of said parameter, corresponding to a limit value X₀ of the opening of the valve known from the project characteristics of the lamination organ 118 below which the lamination is ineffective.

These incremental values Y, which can have a positive or negative value, are preferably preliminarily saved in the memory means (not illustrated), for example of the non-volatile type, included in the processing unit 120.

Depending on the value of the parameter measured Tₛ, the corresponding incremental value Y for the opening of the valve 114 is read (phase 235) in the memory means and subtracted (phase 240) from the opening value X previously known, obtaining the corresponding trace value of the function described above.

This is followed by a verification phase 250 of the entity of the present opening X of the valve.

If the lamination valve 114 is in closure, this operation is interrupted if the verification phase 250 reveals that the opening limit value X₀ has been reached corresponding to the annulment limit value T₀ of the argument of the logarithm.

The sequence of phases described so far 210-250 is repeated cyclically. For each cycle, the limit value Tₗ relating to the reference parameter revealed by the probes 115 is updated (phase 260) on the basis of the variation in the lamination of the cooling fluid and therefore depending on the opening degree X of the valve 114.

In particular, a second incremental value Tₜ is added to the limit value Tₗ, which can have a positive or negative value, depending on the opening degree X of the valve according to a trigonometric law inverse to the tangent having an argument proportional to the opening degree X.

These second incremental values Tₜ are also preferably saved in the memory means of the processing unit 120, and are read depending on the particular instantaneous value of the opening degree X (phase 255)

The processing unit 120 therefore pilots the electric motor 116 of the lamination valve 114 to allow the laminating passage 119 to be freed or blocked in negligible reaction times.

In this way, a higher or lower flow-rate of low-pressure liquid towards the evaporator 112 is obtained and consequently a greater or smaller quantity of low-pressure liquid present in the evaporator 112, respectively.

It is therefore possible to react in rapid times to a variation in the particular parameter revealed, by piloting each time the optimum opening degree of the lamination valve 114 for each measurement obtained by the probes 115.

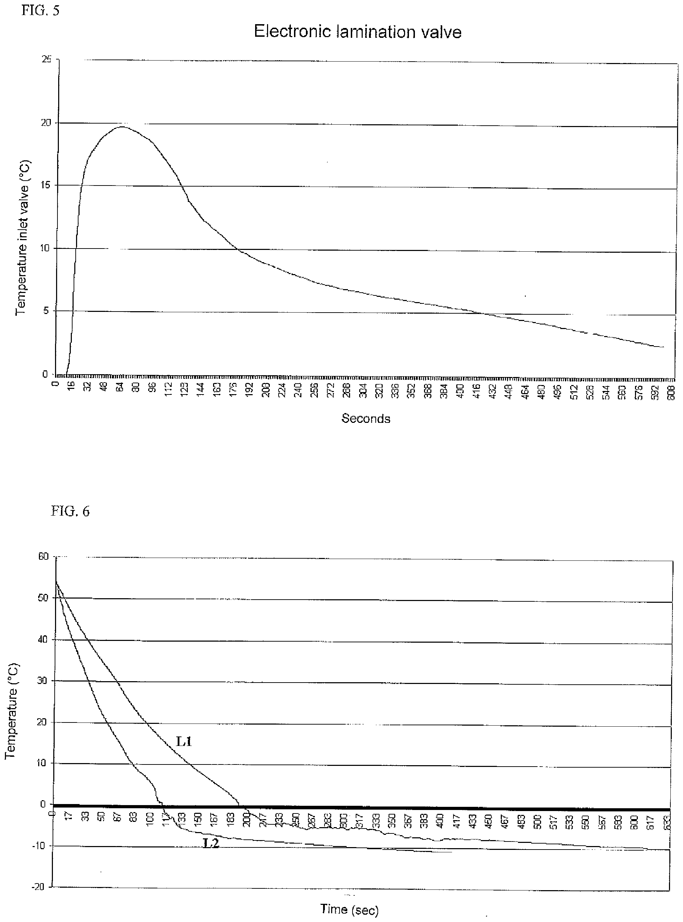

This control effected on a parameter of the food mixture (temperature and/or creaming degree) or cooling means (temperature and/or pressure) also effectively prevents swinging as shown in figure 5.

In the case of the embodiment of figure 9, when, at the beginning of the cooling phase, the processing unit 120 pilots the opening of lamination valve 114, the feeding frequency of the compressor 111' imposed by the inverter 125 is contemporaneously increased, adapting it to the opening degree of the lamination valve 114.

As the mixture is cooled, the processing unit 120 commands the closing of the lamination valve 114 reducing the presence of cooling fluid in the evaporator 112.

Close to the desired temperature, in fact, there is no longer any need to have a large quantity of cooling fluid in the evaporator 112 as a reduced cooling effect is sufficient for bringing the already cold food mixture to the desired temperature.

In this circumstance, the processing unit 120 imposes a decrease in the frequency generated by the inverter 125 thus reducing the rate of the compressor 111', and therefore of the recirculation of the cooling fluid, still maintaining however the suction pressure supplied to the compressor 111' at values higher than the limit value above which the low-pressure safety manometer intervenes.

There is consequently also an overall energy saving by running the compressor 111' in low-consumption regime.

The objectives indicated in the preamble of the description are therefore achieved.

Furthermore, as can be seen in figure 6, the times necessary for reaching the freezing temperature are considerably reduced.

Figure 6 compares the abatement curves of the temperature in a plant of the state of the art (curve L1) and a plant according to the present disclosure (curve L2) used for the production of a same quantity of the same type of ice-cream.

It can be observed that, in the plant according to the present disclosure, the times necessary for reaching the freezing temperature are reduced by about 35%, also bringing the product to lower temperatures. This is due to the high initial opening of the valve which allows a greater initial heat absorption of the mixture.

As the mixture is cooled, the opening of the nozzle is regulated in closure so as to have a correct quantity of cooling fluid inside the evaporator, in this way using the whole evaporating capacity of the cooling fluid.

This quantity must be finely regulated, above all during the change in state of the mixture in which there are no sudden temperature changes.

During this phase, it is essential not to completely close the laminator mouth, which, on the contrary, occurs with swinging of the mechanical valve. If this happens, it is necessary to overcome the thermal inertia of the mixture before succeeding in obtaining from this, sufficient energy for re-establishing the change in state.

This phenomenon is shown in figure 6 in the curve relating to the plant of the state of the art in which an oscillation and a consequent lengthening of the processing times can be observed.

With the electromechanical valve used in the plant it is possible, on the other hand, to finely regulate the nozzle also during the change in state of the mixture, thus allowing the passage of state in rapid times.

In the processing of ice-cream as food mixture, the benefit of a rapid temperature abatement is already well-known. In this way, the residual bacterial charge is in fact maintained in stasis and light ice crystals are created in immersion in the mixture, having sufficiently small dimensions as to prevent the ice-cream obtained from being "burnt" and from dissolving too rapidly.

With the method according to the present invention, it is therefore possible to obtain an ice-cream consisting of very light micro-crystals which cannot therefore migrate towards the low parts of the mass itself, causing a so-called "collapse".

In addition to a saving of the processing times and therefore in both electric and water consumptions for the condensation, the energy balance of the cooling machine is improved by about 20% as only the quantity of cooling fluid strictly necessary, is used.

With the mechanical lamination means currently available, the energy balance of the cycle is worse, specifically as a result of the swinging which prevents there from being a desired quantity of cooling liquid in the evaporator. If, in fact, on an average, the quantity of fluid which circulates within the time unit is the same, this is not the case for the energy which, if there is an excessive quantity of fluid, is not fully exploited and, in the case of an insufficient quantity of fluid, is not available so that not all the heat which could be ideally removed in that instant is absorbed by the cooling fluid.

Finally, thanks to the presence of the inverter 125 which controls the compressor 111', once close to the desired temperature to be reached, it is possible to reduce the work frequency of the compressor 111' itself, maintaining the desired quantity of fluid in circulation and giving it the possibility of evaporating more effectively as it is brought back more slowly to the compressor 111'.

It is therefore possible to modulate the cooling, transforming a high-performance plant into a low-performance plant, with continuous and constant cooling which can also last for long periods and which does not ruin delicate food mixtures through the formation of ice inside the evaporator.

With the plant, it is possible in fact to both increase the yield of the whole plant and also reduce it, by compelling the gas to flow slowly inside the evaporator in a very limited quantity, so as to evaporate only the part necessary for removing a low quantity of heat from the mixture. With the use of the compressor 111 piloted by the inverter 125 and a lamination valve of the electromechanical type, it is in fact possible to decrease the performances of the plant also proportionally reducing the consumptions.

The protection scope of the invention is therefore delimited by the enclosed claims.

## Claims

1. A method for the regulation of a cooling plant (100) with a high cooling capacity, in particular for a food mixture, said cooling plant comprising a closed circuit in which a cooling fluid flows, which connects an evaporator (112), a compressor (111), a condenser (113) and a lamination valve (114) in succession, said lamination valve (114) being of the electromechanical type, a processing unit (120) connected to at least one probe (115) suitable for measuring a parameter depending on the flow-rate of the cooling fluid circulating in said evaporator (112), said processing unit (120) being connected to said lamination valve (114) for piloting the opening and/or closing of said lamination valve (114) on the basis of at least one measurement revealed by said at least one probe (115), said method comprising the phases consisting of:
- acquiring (210) at least one value (T_{S}) revealed by said at least one probe (115);
- piloting (220) the opening of said lamination valve (114) to a pre-established opening degree (X);
- modifying (235) the opening of said lamination valve (114) of a first differential value (Y) depending on the value revealed (T_{S}) by said at least one probe (115) according to a logarithmic variability law,
**characterized in that**
the argument of said logarithmic variability law is given by the sum of said measured value (Tₛ) and a limit value (T₀) corresponding to a limit value of the opening of the valve, known from project characteristics of the lamination organ, below which the lamination is ineffective.

2. The method for the regulation of a cooling plant (100) according to claim 1, **characterized in that** it also comprises the phase which consists in comparing (230) said at least one value (T_{S}) revealed by said at least one probe (115) with a limit value (T₁) and only proceeding with said modification phase (235) when said at least one value (T_{S}) observed is lower than said limit value (T₁).

3. The method for the regulation of a cooling plant (100) according to claim 2, **characterized in that** it also comprises the phase consisting of updating (260) said limit value (T₁) depending on the opening degree (X) of said valve (114) according to a trigonometric variability law inverse to the tangent.

4. The method for the regulation of a cooling plant (100) according to one of the claims from 1 to 3, **characterized in that** it also comprises the phase consisting of comparing (250) said opening degree (X) of said lamination valve (114) with a limit closing value (X₀) and terminating the closing phase of said valve (114) if said opening degree (X) is equal to said limit value (X₀).

5. The method for the regulation of a cooling plant (100) according to one of the claims from 1 to 4, **characterized in that** said acquisition phase (210) consists in acquiring a series of sampling values (T_{S}) and processing said series of values (T_{S}) through mean and elimination operations of spurious values.

6. The method for the regulation of a cooling plant (100) according to any of the claims from 1 to 5, **characterized in that** said modification phase (235) of the opening of said lamination valve (114) consists in piloting an electric motor (116) so as to raise or to lower said laminating organ (118) to free or obstruct said one laminating passage (119) .

7. The method for the regulation of a cooling plant (100) according to any of the claims from 1 to 6, **characterized in that** it also comprises the phase consisting in modifying the frequency generated by an inverter (125), depending on the opening degree (X) of said lamination valve (114).

## Patentansprüche

1. Verfahren zum Regulieren einer Kühlanlage (100) mit einer hohen Kühlkapazität, insbesondere für ein Nahrungsmittelgemisch, wobei die Kühlanlage einen geschlossenen Kreislauf, in welchem ein Kühlfluid strömt, der einen Verdampfer (112), einen Verdichter (111), einen Kondensator (113) sowie ein Laminierungsventil (114) in Folge verbindet, wobei das Laminierungsventil (114) vom elektromechanischen Typ ist, eine Verarbeitungseinheit (120) umfasst, die mit zumindest einer Sonde (115) verbunden ist, die zum Messen eines Parameters abhängig von dem Durchfluss des Kühlfluides geeignet ist, das in dem Verdampfer (112) zirkuliert, wobei die Verarbeitungseinheit (120) mit dem Laminierungsventil (114) zum Steuern des Öffnens und/oder Schließens des Laminierungsventils (114) auf der Basis zumindest einer Messung verbunden ist, die durch die zumindest eine Sonde (115) erhalten wird, wobei das Verfahren Phasen enthält, die umfassen, dass:
- zumindest ein Wert (T_{S}) erlangt (210) wird, der von der zumindest einen Sonde (115) erlangt wird;
- das Öffnen des Laminierungsventils (114) bis zu einem vorher eingerichteten Öffnungsgrad (X) gesteuert (220) wird;
- das Öffnen des Laminierungsventils (114) mit einem ersten Differenzwert (Y) abhängig von dem Wert, der von der zumindest einen Sonde (115) erhalten (T_{S}) wird, gemäß einem logarithmischen Variabilitätsgesetz modifiziert (235) wird,
**dadurch gekennzeichnet, dass**
das Argument des logarithmischen Variabilitätsgesetzes durch die Summe des gemessenen Wertes (T_{S}) und eines Grenzwertes (T₀) gegeben ist, der einem Grenzwert des Öffnens des Ventils entspricht, das aus Projektcharakteristiken des Laminierungsorganes bekannt ist, unterhalb dem die Laminierung ineffektiv ist.

2. Verfahren für die Regulierung einer Kühlanlage (100) nach Anspruch 1, **dadurch gekennzeichnet, dass** sie auch eine Phase umfasst, die daraus besteht, dass der zumindest eine Wert (T_{S}), der von der zumindest einen Sonde (115) erhalten wird, mit einem Grenzwert (T₁) verglichen (230) wird und nur dann mit der Modifikationsphase (235) fortgefahren wird, wenn der zumindest eine Wert (T_{S}), der beobachtet wurde, geringer als der Grenzwert (T₁) ist.

3. Verfahren für die Regulierung einer Kühlanlage (100) nach Anspruch 2, **dadurch gekennzeichnet, dass** es auch eine Phase umfasst, die daraus besteht, den Grenzwert (T₁) abhängig von dem Öffnungsgrad (X) des Ventils (114) gemäß einem trigonometrischen Variabilitätsgesetz invers zu der Tangente zu aktualisieren (260).

4. Verfahren für die Regulierung einer Kühlanlage (100) nach einem der Ansprüche 1 bis 3, **dadurch gekennzeichnet, dass** sie auch eine Phase umfasst, die daraus besteht, den Öffnungsgrad (X) des Laminierungsventils (114) mit einem Grenzschließwert (X₀) zu vergleichen (250) und die Schließphase des Ventils (114) zu beenden, wenn der Öffnungsgrad (X) gleich dem Grenzwert (X₀) ist.

5. Verfahren für die Regulierung einer Kühlanlage (100) nach einem der Ansprüche 1 bis 4, **dadurch gekennzeichnet, dass** die Aufnahmephase (210) aus einem Erlangen einer Reihe von Abtastwerten (T_{S}) und einem Verarbeiten der Reihe von Werten (T_{S}) durch Mittelwert- und Eliminierungsarbeitsgänge falscher Werte besteht.

6. Verfahren für die Regulierung einer Kühlanlage (100) nach einem der Ansprüche 1 bis 5, **dadurch gekennzeichnet, dass** die Modifizierungsphase (235) des Öffnens des Laminierungsventils (114) aus einem Steuern eines Elektromotors (116) besteht, um so das Laminierungsorgan (118) anzuheben oder abzusenken, um den einen Laminierungsdurchgang (119) freizumachen oder zu behindern.

7. Verfahren für die Regulierung einer Kühlanlage (100) nach einem der Ansprüche 1 bis 6, **dadurch gekennzeichnet, dass** sie auch eine Phase umfasst, die daraus besteht, dass die Frequenz, die durch einen Umrichter (125) erzeugt wird, abhängig von dem Öffnungsgrad (X) des Laminierungsventils (114) modifiziert wird.

## Revendications

1. Procédé de régulation d'une installation de refroidissement (100) à haute capacité de refroidissement, en particulier pour un mélange alimentaire, ladite installation de refroidissement comprenant :
un circuit fermé dans lequel s'écoule un fluide de refroidissement qui relie successivement un évaporateur (112), un compresseur (111), un condenseur (113) et une vanne de laminage (114), ladite vanne de laminage (114) étant de type électromécanique ; une unité de traitement (120) reliée à au moins une sonde (115) adaptée pour mesurer un paramètre dépendant du débit du fluide de refroidissement circulant dans ledit évaporateur (112), ladite unité de traitement (120) étant reliée à ladite vanne de laminage (114) pour piloter l'ouverture et/ou la fermeture de ladite vanne de laminage (114) sur la base d'au moins une mesure fournie par ladite sonde (115), au nombre d'au moins une, ledit procédé comprenant les phases suivantes :
- acquisition (210) d'au moins une valeur (T_{S}) fournie par ladite sonde (115), au nombre d'au moins une ;
- pilotage (220) de l'ouverture de ladite vanne de laminage (114) jusqu'à un degré d'ouverture (X) préétabli ;
- modification (235) de l'ouverture de ladite vanne de laminage (114), d'une première valeur différentielle (Y) dépendant de la valeur (T_{S}) fournie par ladite sonde (115), au nombre d'au moins une, conformément à une loi de variabilité logarithmique,
**caractérisé en ce que**
l'argument de ladite loi de variabilité logarithmique est donné par la somme de ladite valeur mesurée (T_{S}) et d'une valeur limite (T₀) correspondant à une valeur limite de l'ouverture de la vanne, connue par des caractéristiques de projet de l'organe de laminage, au-dessous de laquelle le laminage est inefficace.

2. Procédé de régulation d'une installation de refroidissement (100) selon la revendication 1, **caractérisé en ce qu'**il comprend également la phase qui consiste en la comparaison (230) de ladite valeur (T_{S}), au nombre d'au moins une, fournie par ladite sonde (115), au nombre d'au moins une, avec une valeur limite (T₁), et en la poursuite de ladite phase de modification (235), uniquement lorsque ladite valeur (T_{S}) observée, au nombre d'au moins une, est inférieure à ladite valeur limite (T₁).

3. Procédé de régulation d'une installation de refroidissement (100) selon la revendication 2, **caractérisé en ce qu'**il comprend également la phase qui consiste en la mise à jour (260) de ladite valeur limite (T₁) en fonction du degré d'ouverture (X) de ladite vanne (114), conformément à une loi de variabilité trigonométrique inverse à la tangente.

4. Procédé de régulation d'une installation de refroidissement (100) selon une des revendications 1 à 3, **caractérisé en ce qu'**il comprend également la phase qui consiste en la comparaison (250) dudit degré d'ouverture (X) de ladite vanne de laminage (114) avec une valeur de fermeture limite (X₀), et à terminer la phase de fermeture de ladite vanne (114), si ledit degré d'ouverture est égal à ladite valeur limite (X₀).

5. Procédé de régulation d'une installation de refroidissement (100) selon une des revendications 1 à 4, **caractérisé en ce que** ladite phase d'acquisition (210) consiste en l'acquisition d'une série de valeurs d'échantillonnage (T_{S}) et en le traitement de ladite série de valeurs (T_{S}) par des opérations de moyenne et d'élimination de valeurs parasites.

6. Procédé de régulation d'une installation de refroidissement (100) selon une des revendications 1 à 5, **caractérisé en ce que** ladite phase de modification (235) de l'ouverture de ladite vanne de laminage (114) consiste en le pilotage d'un moteur électrique (116), de manière à faire monter ou descendre ledit organe de laminage (118) afin de libérer ou d'obturer ledit passage de laminage (119).

7. Procédé de régulation d'une installation de refroidissement (100) selon une des revendications 1 à 6, **caractérisé en ce qu'**il comprend également la phase consistant en la modification de la fréquence générée par un onduleur (125), en fonction du degré d'ouverture (X) de ladite vanne de laminage (114).
